# EUROPÄISCHE PATENTSCHRIFT

(11) **EP 3 925 868 B1**
(45) Veröffentlichungstag und Bekanntmachung des Hinweises auf die Patenterteilung: **06.12.2023**
(21) Anmeldenummer: 21170512.4
(22) Anmeldetag: 26.04.2021
(51) Int. Cl.: B62H 5/00, E05B 67/38, E05B 71/00, B62J 11/00

(54) **HALTERUNG FÜR EIN TRAGBARES SCHLOSS**
HOLDER FOR A PORTABLE LOCK
SUPPORT POUR UNE SERRURE PORTABLE

(30) Priorität: 18.06.2020 DE 102020116154
(43) Veröffentlichungstag der Anmeldung: 22.12.2021
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 1 249 566
- CN-U- 204 452 673
- DE-U1-202004 007 927
- DE-U1-202014 103 690
- JP-A- 2005 179 890
- US-B1- 6 467 316

## Beschreibung

Die vorliegende Erfindung betrifft eine Halterung für ein tragbares Schloss, welches einen Schlosskörper mit einem Verriegelungsmechanismus und einer federbelasteten Taste aufweist. Die Halterung weist zumindest einen ersten Halteabschnitt und einen zweiten Halteabschnitt auf, welcher dem ersten Halteabschnitt bezüglich eines Aufnahmeraums für den Schlosskörper gegenüberliegt, wobei der erste und der zweite Halteabschnitt dazu ausgebildet sind, den entlang einer Einführrichtung in die Halterung eingesetzten Schlosskörper an einer ersten Seite und einer der ersten Seite entgegengesetzten zweiten Seite des Schlosskörpers zu umgreifen. Die Erfindung betrifft ferner ein Schlosssystem mit einer derartigen Halterung und mit einem zugehörigen Schloss.

Ein derartiges Schloss kann bei mobilen Anwendungen dazu dienen, einen Gegenstand - beispielsweise ein Zweirad, ein Sportgerät oder ein Gepäckstück - an einem stationären Objekt festzulegen oder den Gegenstand bewegungsunfähig zu machen. Eine zugehörige Halterung dient dazu, das tragbare Schloss bei Nichtgebrauch komfortabel und sicher mitführen zu können, also während das Schloss nicht für seine Sicherungsfunktion benötigt wird. Der erste Halteabschnitt und der zweite Halteabschnitt der Halterung können hierfür einen Aufnahmeraum begrenzen, in welchen das Schloss eingesetzt werden kann.

Während eines Transports des Schlosses, beispielsweise während der Fahrt mit einem Zweirad, ist es wichtig, dass das in die Halterung eingesetzte Schloss sich nicht etwa aufgrund von Erschütterungen unbeabsichtigt aus der Halterung löst. Beispielsweise ist aus DE 20 2005 013 390 U1 eine Halterung für ein Faltschloss bekannt, bei der eine Lasche über das in die Halterung eingesetzte Schloss gelegt werden kann, um das Schloss in dem Aufnahmeraum der Halterung zu sichern.

Ferner sind aus DE 20 2014 103 690 U1 eine Halterung für ein Faltschloss, aus US 6 467 316 B1 eine Halterung für ein Bügelschloss und aus DE 20 2004 007 927 U1 eine Halterung für ein Kabelschloss bekannt. In EP 1 249 566 A2 ist ein Kettenschloss mit einem Schlosskörper beschrieben, welcher ein Gehäuse in Form eines Vierkantprofils aus gehärtetem Stahl aufweist.

Es ist eine Aufgabe der Erfindung, eine Halterung für ein tragbares Schloss der genannten Art bereitzustellen, bei der das Schloss leicht in die Halterung eingesetzt werden kann und das Schloss bei Nichtgebrauch zuverlässig in der Halterung gesichert ist.

Diese Aufgabe wird durch ein Schlosssystem mit einer Halterung mit den Merkmalen des Anspruchs 1 gelöst. Die Halterung des Schlosssystems weist zumindest an dem ersten Halteabschnitt eine Sicherungsöffnung auf, welche dazu ausgebildet ist, die federbelastete Taste des Schlosskörpers in Eingriff zu nehmen, um hierdurch den Schlosskörper gegen ein unbeabsichtigtes Lösen aus der Halterung entgegen der Einführrichtung zu sichern.

Eine derartige Halterung vermag, den Schlosskörper eines tragbaren bzw. mobilen Schlosses zu umgreifen, wodurch das Schloss zumindest in einer seitlichen Richtung in einem Aufnahmeraum der Halterung festgelegt ist, welcher durch zwei Halteabschnitte der Halterung begrenzt ist. In diesen Aufnahmeraum kann der Schlosskörper entlang einer Einführrichtung eingesetzt werden. Zusätzlich sichert die Halterung den Schlosskörper gegen ein unbeabsichtigtes Lösen entgegen der Einführrichtung, indem die Halterung zumindest an einem der Halteabschnitte eine Sicherungsöffnung aufweist, welche eine federbelastete Taste des Schlosskörpers in Eingriff nimmt. Da die Sicherungsöffnung an einem der Halteabschnitte der Halterung vorgesehen ist, welche den Schlosskörper an zwei einander entgegengesetzten Seiten (insbesondere spielfrei) umgreifen, kann selbst bei einem geringen Betätigungshub der Taste (Abstand zwischen der eingedrückten Stellung und der ausgefahrenen Stellung der Taste) der Eingriff der Taste in die Sicherungsöffnung eine zuverlässige Festlegung des Schlosskörpers bewirken.

Somit wird eine an dem Schlosskörper vorhandene Taste dazu verwendet, das Schloss bei Nichtgebrauch in der Halterung zu sichern. Die federbelastete Taste kann an dem Schlosskörper beispielsweise zum Betätigen des Verriegelungsmechanismus und/oder zum Betätigen eines Schließbügels des Schlosses vorgesehen sein.

Um den Schlosskörper wieder entgegen der Einführrichtung aus der Halterung entnehmen zu können, muss lediglich die Taste des Schlosskörpers kurzzeitig gedrückt und somit außer Eingriff mit der Sicherungsöffnung der Halterung gebracht werden.

Demnach ermöglicht es die Halterung, ein tragbares Schloss der genannten Art bei einfacher Handhabung in die Halterung einzusetzen, in der Halterung zuverlässig zu sichern und wiederum bei einfacher Handhabung aus der Halterung lösen zu können.

Ferner kann die Verwendung einer Halterung der erläuterten Art zum gesicherten Halten eines tragbaren Schlosses vorgesehen sein, welches einen Schlosskörper mit einem Verriegelungsmechanismus und einer federbelasteten Taste aufweist.

Verschiedene Ausführungsformen der Erfindung werden nachfolgend erläutert.

Die Sicherungsöffnung der Halterung für die Taste des Schlosskörpers kann umfänglich geschlossen sein. Insbesondere kann die Sicherungsöffnung dazu ausgebildet sein, die Taste formschlüssig zu umgeben. Dies ist allerdings nicht zwingend erforderlich. Wichtig ist vor allem, dass eine Begrenzung der Sicherungsöffnung einen Anschlag bildet, der die ausgefahrene Taste gegen eine Bewegung entgegen der Einführrichtung blockiert. Insbesondere kann die entgegen der Einführrichtung gelegene Begrenzung der Sicherungsöffnung eine abgesetzte Kante bilden, um die ausgefahrene Taste an einer Bewegung entgegen der Einführrichtung zu hindern.

Bei einigen Ausführungsformen kann die Halterung umfänglich offen sein, wobei die Halterung den Schlosskörper insbesondere an drei Seiten umgreift (in einer Normalebene zu der Einführrichtung). Beispielsweise kann die Halterung im Querschnitt U-förmig oder C-förmig sein.

Bei anderen Ausführungsformen kann die Halterung den Schlosskörper umfänglich geschlossen umgreifen. Beispielsweise kann die Halterung im Querschnitt rechteckig, oval oder O-förmig sein.

Bei einigen Ausführungsformen kann die Halterung an dem zweiten Halteabschnitt eine weitere Sicherungsöffnung aufweisen, wobei die beiden Halteabschnitte und die beiden Sicherungsöffnungen in einer um 180 Grad rotationssymmetrischen Anordnung vorgesehen sind, um den Schlosskörper wahlweise in einer von zwei möglichen Ausrichtungen aufnehmen und sichern zu können. Hierdurch ist eine besonders einfache Handhabung möglich, da der Benutzer den Schlosskörper in einer von zwei möglichen Ausrichtungen in die Halterung einsetzen kann (bezogen auf eine Drehung um eine Achse, die der Einführrichtung entspricht), ohne auf die Position der Taste achten zu müssen.

Bei einigen Ausführungsformen kann die Halterung an ihrem entgegen der Einführrichtung weisenden Ende eine Einführschräge aufweist, die eine Querschnittsaufweitung der Halterung bildet, um das Einführen des Schlosskörpers in die Halterung zu erleichtern und/oder bei dem Einführen des Schlosskörpers in die Halterung ein Zurückdrängen der Taste zu bewirken. Insbesondere kann eine Einführschräge in wenigstens einem Winkelbereich vorgesehen sein, welcher der Position der Taste an dem Schlosskörper entspricht. Eine derartige Einführschräge kann dazu dienen, während des Einsetzens des Schlosskörpers in den Aufnahmeraum der Halterung die federbelastete Taste entgegen ihrer Federvorspannung temporär zurückzudrängen, so dass keine zusätzliche händische Betätigung der Taste erforderlich ist und die Taste bei Erreichen der Sicherungsöffnung aufgrund ihrer Federvorspannung automatisch in die Sicherungsöffnung einrasten kann.

Bei einigen Ausführungsformen kann die Halterung in und entgegen Einführrichtung offen sein, wobei der erste Halteabschnitt und der zweite Halteabschnitt einen im Wesentlichen konstanten Querschnitt des Aufnahmeraums für den Schlosskörper begrenzen, so dass der Schlosskörper allein durch den Eingriff der Taste des Schlosskörpers in die Sicherungsöffnung gegen ein unbeabsichtigtes Lösen aus der Halterung in und entgegen der Einführrichtung gesichert wird.

Bei anderen Ausführungsformen kann die Halterung entlang der Einführrichtung sich konisch verjüngend ausgebildet sein, um die Einführtiefe des in die Halterung eingesetzten Schlosskörpers zu begrenzen. Alternativ oder zusätzlich kann die Halterung einen in Einführrichtung gelegenen Stützabschnitt aufweisen (beispielsweise einen geschlossenen Boden oder einen teilweise offenen Bodenabschnitt), um den in die Halterung eingesetzten Schlosskörper bezüglich der Einführrichtung abzustützen.

Bei einigen Ausführungsformen kann die Halterung einen Befestigungsabschnitt mit einem quer zu der Einführrichtung verlaufenden Befestigungskanal aufweist, durch den ein Befestigungsband zum Befestigen der Halterung an einem Objekt, insbesondere an einem Rohrabschnitt eines Zweirads, hindurchgeführt werden kann. Der Befestigungsabschnitt kann insbesondere außerhalb des Aufnahmeraums für den Schlosskörper vorgesehen sein. Alternativ oder zusätzlich kann die Halterung zwei Befestigungsöffnungen aufweisen, durch die eine jeweilige Befestigungsschraube zum Befestigen der Halterung an einem Objekt, insbesondere an einem Rohrabschnitt eines Zweirads, hindurchgeführt werden kann. Die Befestigungsöffnungen können insbesondere dem üblichen Abstand der Gewindebohrungen eines Zweiradrahmens für einen Flaschenhalter entsprechen. Somit kann die Halterung auf einfache Weise an einem Objekt, insbesondere an einem Rohrabschnitt eines Zweirads, befestigt werden.

Die Erfindung bezieht sich somit auf ein Schlosssystem mit einer Halterung der erläuterten Art und mit einem Schloss, welches einen Schlosskörper mit einem Verriegelungsmechanismus und einer federbelasteten Taste aufweist.

Die federbelastete Taste kann in einer Ruhestellung bzw. in einem ausgefahrenen Zustand über den Schlosskörper überstehen. Hierdurch ist ein zuverlässiger Eingriff in die Sicherungsöffnung der Halterung möglich.

Bei einigen Ausführungsformen kann die Taste entgegen einer Betätigungsrichtung vorgespannt sein. Hierbei kann die Taste entlang der Betätigungsrichtung über eine Seitenfläche des Schlosskörpers überstehen, und/oder die Taste kann die maximale Breite des Schlosskörpers entlang der Betätigungsrichtung festlegen. Die Betätigungsrichtung kann quer, insbesondere senkrecht, zu der Einführrichtung verlaufen.

Die federbelastete Taste kann infolge des Einsetzens des Schlosses in den Aufnahmeraum der Halterung bei Erreichen der Sicherungsöffnung der Halterung insbesondere automatisch in die Sicherungsöffnung einschnappen.

Bei einigen Ausführungsformen kann der Verriegelungsmechanismus einen Kombinationsschließmechanismus umfassen, wobei die Taste lediglich dann betätigbar ist, um die Taste außer Eingriff mit der Sicherungsöffnung der Halterung zu bringen, wenn an dem Kombinationsschließmechanismus ein Schließgeheimnis eingestellt ist. Hierdurch kann das Schloss indirekt (über die Taste) gegen eine unbefugte Entnahme aus der Halterung gesichert sein. Der Kombinationsschließmechanismus kann mehrere um eine Drehachse drehbare Codeeinstellringe aufweisen.

Bei einigen Ausführungsformen kann das Schloss einen flexiblen oder starren Schließbügel mit wenigstens einem freien Ende aufweisen, welches an dem Schlosskörper verriegelbar ist, um eine geschlossene Schlaufe zu bilden. Beispielsweise kann der Schließbügel ein Drahtseil, einen starren Bügel (insbesondere U-förmig), einen Gelenkstabbügel oder eine Kette umfassen. Der Schließbügel kann eine variable Länge oder eine fixe Länge aufweisen.

Die federbelastete Taste des Schlosskörpers kann beispielsweise dazu dienen, den Verriegelungsmechanismus in eine Freigabestellung oder eine Verriegelungsstellung zu versetzen oder den Schließbügel für eine Bewegung relativ zu dem Schlosskörper freizugeben, zu sperren oder in sonstiger Weise zu steuern. Die federbelastete Taste des Schlosskörpers kann auch zur Steuerung des Verriegelungsmechanismus oder einer sonstigen Funktion bei einem elektronischen tragbaren Schloss dienen (z.B. tragbares Zweiradschloss mit einem Elektromotor für einen elektromechanischen Verriegelungsmechanismus).

Die Erfindung wird nachfolgend lediglich beispielhaft anhand der Zeichnungen erläutert.
- Fig. 1 bis 4: zeigen eine Perspektivansicht von links oben, eine Perspektivansicht von rechts unten, eine Seitenansicht von rechts und eine Draufsicht einer Halterung.
- Fig. 5 und 6: zeigen ein tragbares Schloss, welches mittels der Halterung gemäß Fig. 1 bis 4 gehalten und transportiert werden kann.
- Fig. 7 und 8: zeigen ein weiteres tragbares Schloss.

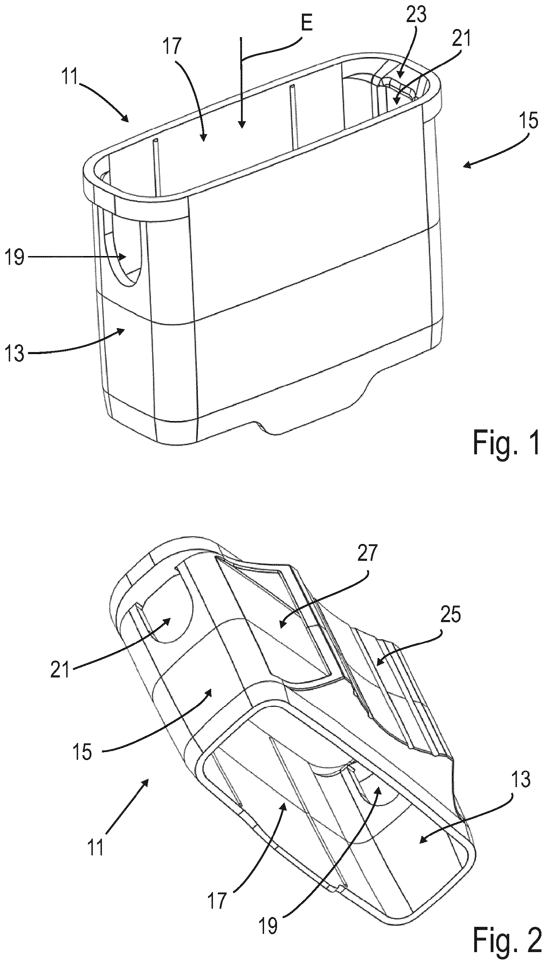

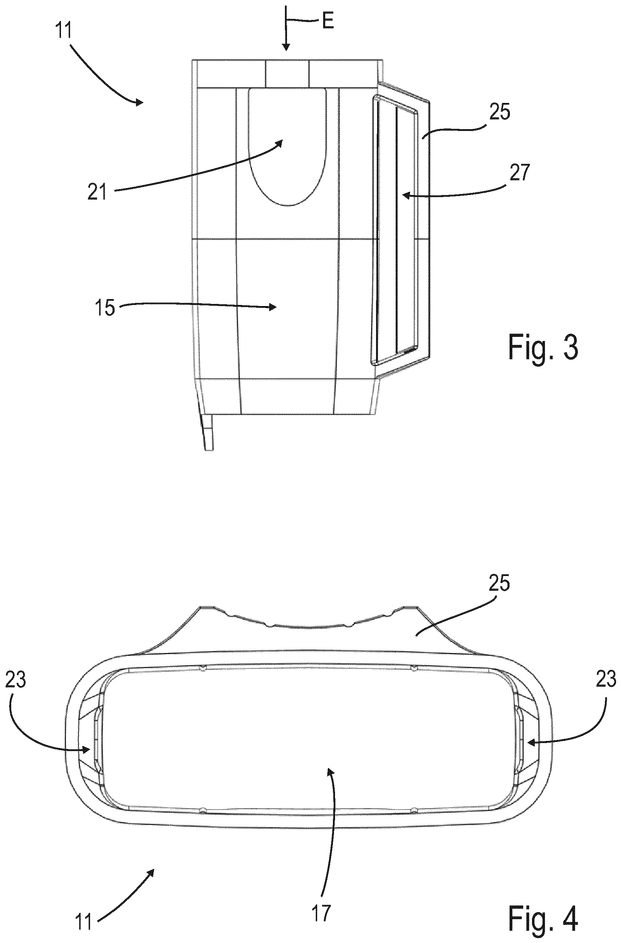

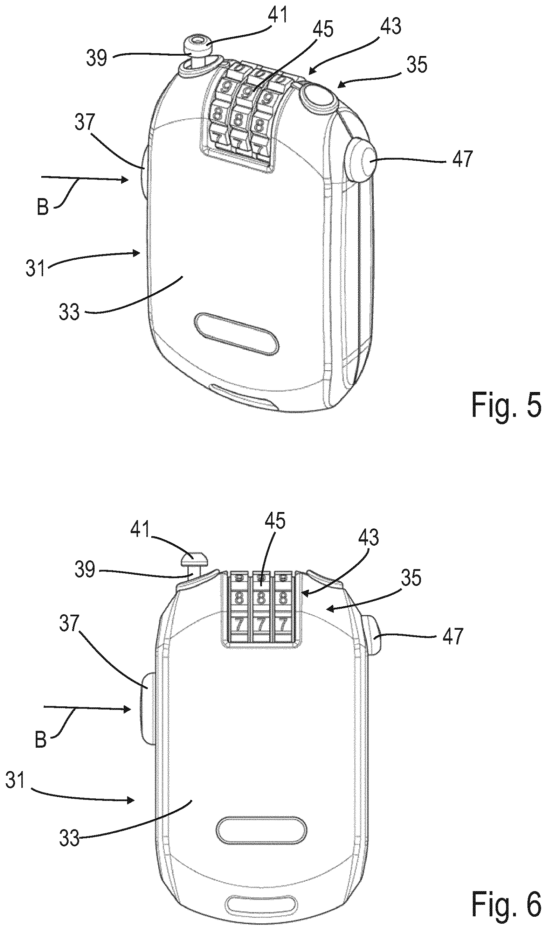

Fig. 1 bis 4 zeigen eine Halterung 11 zum zeitweiligen Halten eines Schlosses 31 beispielsweise der in Fig. 5 und 6 gezeigten Art, welches entlang einer Einführrichtung E in die Halterung 11 eingesetzt werden kann. Ein derartiges Schloss 31 weist einen Schlosskörper 33 mit einem Verriegelungsmechanismus 35 und einer federbelasteten Taste 37 auf. Die Taste 37 steht aufgrund ihrer Vorspannung in einer Ruhestellung über eine Seitenfläche des Schlosskörpers 33 über und kann entgegen der Vorspannung entlang einer Betätigungsrichtung B, die quer zu der Einführrichtung E verläuft, in Richtung des Schlosskörpers 33 gedrückt werden. Ferner kann ein derartiges Schloss 31 einen Schließbügel 39 aufweisen, der in einer Geschlossenstellung mittels des Verriegelungsmechanismus 35 an dem Schlosskörper 33 verriegelt sein kann und in einer Freigabestellung des Verriegelungsmechanismus 35 in eine Offenstellung gebracht werden kann, in der wenigstens ein Ende des Schließbügels 39 von dem Schlosskörper 33 gelöst werden kann.

Bei der Ausführungsform gemäß Fig. 5 und 6 ist der Schließbügel 39 als Drahtseil ausgebildet, welches entgegen einer Federkraft aus dem Schlosskörper 33 herausziehbar ist und an seinem freien Ende einen Kloben 41 aufweist, welcher an dem Schlosskörper 33 verriegelbar ist, wie dies beispielsweise aus US D862198 S oder US 4896517 bekannt ist. Der Verriegelungsmechanismus 35 weist einen Kombinationsschließmechanismus 43 mit mehreren drehbaren Codeeinstellringen 45 auf. Die federbelastete Taste 37 dient hier zum Zurückziehen des Schließbügels 39 in den Schlosskörper 33 hinein mittels Federkraft. Eine weitere federbelastete Taste 47 des Schlosskörpers 33 dient zum Versetzen des Verriegelungsmechanismus 35 in eine Freigabestellung. Beide Tasten 37, 47 können lediglich dann betätigt werden, wenn an den Codeeinstellringen 45 das Schließgeheimnis eingestellt ist.

Die Halterung 11 ist generell hülsenförmig, mit einem umfänglich geschlossenen, im Wesentlichen rechteckigen Querschnitt (mit abgerundeten Ecken) und mit offenen Enden in und entgegen der Einführrichtung E. Die Halterung 11 weist einen ersten Halteabschnitt 13 und einen zweiten Halteabschnitt 15 auf, welcher dem ersten Halteabschnitt 13 bezüglich eines Aufnahmeraums 17 für den Schlosskörper 33 diametral gegenüberliegt. Der erste und der zweite Halteabschnitt 13, 15 sind dazu ausgebildet, den entlang der Einführrichtung E in den Aufnahmeraum 17 eingesetzten Schlosskörper 33 an zwei einander entgegengesetzten Seiten des Schlosskörpers 33 bezüglich der Betätigungsrichtung B im Wesentlichen spielfrei zu umgreifen. Die Halterung 11 weist an den beiden Halteabschnitten 13, 15 eine jeweilige Sicherungsöffnung 19, 21 auf, welche dazu ausgebildet ist, die federbelastete Taste 37 des Schlosskörpers 33 in ihrer aus dem Schlosskörper 33 herausstehenden Ruhelage in formschlüssigen Eingriff zu nehmen, um hierdurch den Schlosskörper 33 gegen ein unbeabsichtigtes Lösen aus der Halterung 11 entgegen der Einführrichtung E zu sichern.

An ihrem entgegen der Einführrichtung E gelegenen Ende weist die Halterung 11 jeweils in einem den Sicherungsöffnungen 19, 21 entsprechenden Winkelbereich (bezogen auf die Einführrichtung E) zwei Einführschrägen 23 auf. An ihrer Rückseite weist die Halterung 11 einen Befestigungsabschnitt 25 mit einem quer zu der Einführrichtung E verlaufenden Befestigungskanal 27 auf, durch den ein Befestigungsband (nicht gezeigt) zum Befestigen der Halterung 11 an einem Rohrabschnitt eines Zweirads hindurchgeführt werden kann.

Die federbelastete Taste 37 des Schlosskörpers 33 wird somit dazu verwendet, das Schloss 31 bei Nichtgebrauch in der Halterung 11 zu sichern. Alternativ könnte auch die Taste 47 hierfür verwendet werden (bei entsprechender Position und Form der Sicherungsöffnungen 19, 21). Um den Schlosskörper 33 wieder entgegen der Einführrichtung E aus der Halterung 11 entnehmen zu können, muss lediglich die Taste 37 bzw. 47 des Schlosskörpers 33 kurzzeitig gedrückt und somit außer Eingriff mit der Sicherungsöffnung 19, 21 der Halterung 11 gebracht werden.

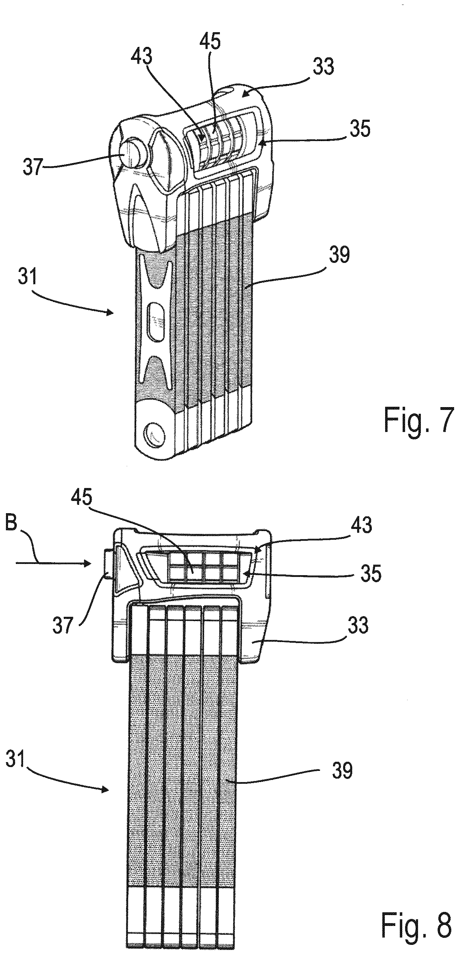

Fig. 7 und 8 zeigen ein weiteres tragbares Schloss 31, welches einen Schlosskörper 33 mit einem Verriegelungsmechanismus 35 und einer federbelasteten Taste 37 zum Betätigen des Verriegelungsmechanismus 35 aufweist, wie beispielsweise aus US D657657 S oder EP 2019178 B1 bekannt ist. Ein derartiges Schloss 31 wird auch als Faltschloss oder Gelenkstabschloss bezeichnet und besitzt einen flexiblen Schließbügel in Form eines Gelenkstabbügels. Eine ähnliche Halterung 11 wie in Fig. 1 bis 4 gezeigt (mit angepasster Querschnittsform) kann das Schloss gemäß Fig. 7 und 8 aufnehmen, wobei die Taste 37 dazu verwendet wird, durch Eingriff in eine der Sicherungsöffnungen 19, 21 das Schloss 31 in der Halterung 11 zu sichern.

### Bezugszeichenliste

- 11: Halterung
- 13: Halteabschnitt
- 15: Halteabschnitt
- 17: Aufnahmeraum
- 19: Sicherungsöffnung
- 21: Sicherungsöffnung
- 23: Einführschräge
- 25: Befestigungsabschnitt
- 27: Befestigungskanal
- 31: Schloss
- 33: Schlosskörper
- 35: Verriegelungsmechanismus
- 37: Taste
- 39: Schließbügel
- 41: Kloben
- 43: Kombinationsschließmechanismus
- 45: Codeeinstellringen
- 47: Taste

- B: Betätigungsrichtung
- E: Einführrichtung

## Patentansprüche

1. Schlosssystem mit einer Halterung (11) und mit einem Schloss (31), welches einen Schlosskörper (33) mit einem Verriegelungsmechanismus (35) und einer federbelasteten Taste (37) zum Betätigen des Verriegelungsmechanismus (35) aufweist,
wobei die Halterung (11) zumindest einen ersten Halteabschnitt (13) und einen zweiten Halteabschnitt (15) aufweist, welcher dem ersten Halteabschnitt (13) bezüglich eines Aufnahmeraums (17) für den Schlosskörper (33) gegenüberliegt, wobei der erste und der zweite Halteabschnitt (13, 15) dazu ausgebildet sind, den entlang einer Einführrichtung in die Halterung (11) eingesetzten Schlosskörper (33) an einer ersten Seite und einer der ersten Seite entgegengesetzten zweiten Seite des Schlosskörpers (33) zu umgreifen,
**dadurch gekennzeichnet,**
**dass** die Halterung (11) zumindest an dem ersten Halteabschnitt (13) eine Sicherungsöffnung (19) aufweist, welche dazu ausgebildet ist, die Taste (37) des Schlosskörpers (33) in Eingriff zu nehmen, um hierdurch den Schlosskörper (33) gegen ein unbeabsichtigtes Lösen aus der Halterung (11) entgegen der Einführrichtung (E) zu sichern.

2. Schlosssystem nach Anspruch 1,
wobei die Taste (37) in einer Ruhestellung über den Schlosskörper (33) übersteht.

3. Schlosssystem nach Anspruch 1 oder 2,
wobei die Taste (37) entgegen einer Betätigungsrichtung (B) vorgespannt ist,
wobei die Taste (37) entlang der Betätigungsrichtung (B) über eine Seitenfläche des Schlosskörpers (33) übersteht und/oder wobei die Taste (37) die maximale Breite des Schlosskörpers (33) entlang der Betätigungsrichtung (B) festlegt.

4. Schlosssystem nach einem der vorhergehenden Ansprüche,
wobei der Verriegelungsmechanismus (35) einen Kombinationsschließmechanismus (43) umfasst, wobei die Taste (37) lediglich dann betätigbar ist, um die Taste (37) außer Eingriff mit der Sicherungsöffnung (19) der Halterung (11) zu bringen, wenn an dem Kombinationsschließmechanismus (43) ein Schließgeheimnis eingestellt ist.

5. Schlosssystem nach einem der vorhergehenden Ansprüche,
wobei das Schloss (31) einen flexiblen oder starren Schließbügel (39) mit wenigstens einem freien Ende aufweist, welches an dem Schlosskörper (33) verriegelbar ist, um eine geschlossene Schlaufe zu bilden.

6. Schlosssystem nach einem der vorhergehenden Ansprüche,
wobei die Sicherungsöffnung (19) umfänglich geschlossen ist.

7. Schlosssystem nach einem der vorhergehenden Ansprüche,
wobei die Halterung (11) umfänglich offen ist, wobei die Halterung (11) den Schlosskörper (33) insbesondere an drei Seiten umgreift; oder
wobei die Halterung (11) den Schlosskörper (33) umfänglich geschlossen umgreift.

8. Schlosssystem nach einem der vorhergehenden Ansprüche,
wobei die Halterung (11) an dem zweiten Halteabschnitt (15) eine weitere Sicherungsöffnung (21) aufweist, wobei die beiden Halteabschnitte (13, 15) und die beiden Sicherungsöffnungen (19, 21) in einer um 180 Grad rotationssymmetrischen Anordnung vorgesehen sind, um den Schlosskörper (33) wahlweise in einer von zwei möglichen Ausrichtungen aufnehmen und sichern zu können.

9. Schlosssystem nach einem der vorhergehenden Ansprüche,
wobei die Halterung (11) an ihrem entgegen der Einführrichtung (E) weisenden Ende eine Einführschräge (23) aufweist, die eine Querschnittsaufweitung der Halterung (11) bildet, um das Einführen des Schlosskörpers (33) in die Halterung (11) zu erleichtern und/oder bei dem Einführen des Schlosskörpers (33) in die Halterung (11) ein Zurückdrängen der Taste (37) zu bewirken.

10. Schlosssystem nach einem der vorhergehenden Ansprüche,
wobei die Halterung (11) in und entgegen Einführrichtung (E) offen ist, wobei der erste Halteabschnitt (13) und der zweite Halteabschnitt (15) einen im Wesentlichen konstanten Querschnitt des Aufnahmeraums (17) für den Schlosskörper (33) begrenzen, so dass der Schlosskörper (33) allein durch den Eingriff der Taste (37) des Schlosskörpers (33) in die Sicherungsöffnung (19) gegen ein unbeabsichtigtes Lösen aus der Halterung (11) in und entgegen der Einführrichtung (E) sicherbar ist.

11. Schlosssystem nach einem der Ansprüche 1 bis 9,
wobei die Halterung (11) entlang der Einführrichtung (E) sich konisch verjüngend ausgebildet ist, um die Einführtiefe des in die Halterung (11) eingesetzten Schlosskörpers (33) zu begrenzen; und/oder wobei die Halterung (11) einen in Einführrichtung (E) gelegenen Stützabschnitt aufweist, um den in die Halterung (11) eingesetzten Schlosskörper (33) bezüglich der Einführrichtung (E) abzustützen.

12. Schlosssystem nach einem der vorhergehenden Ansprüche,
wobei die Halterung (11) einen Befestigungsabschnitt (25) mit einem quer zu der Einführrichtung (E) verlaufenden Befestigungskanal (27) aufweist, durch den ein Befestigungsband zum Befestigen der Halterung (11) an einem Objekt, insbesondere an einem Rohrabschnitt eines Zweirads, hindurchführbar ist; und/oder
wobei die Halterung (11) zwei Befestigungsöffnungen aufweist, durch die eine jeweilige Befestigungsschraube zum Befestigen der Halterung (11) an einem Objekt, insbesondere an einem Rohrabschnitt eines Zweirads, hindurchführbar ist.

## Claims

1. A lock system comprising a holder (11) and a lock (31) which has a lock body (33) having a locking mechanism (35) and a spring-loaded button (37) for actuating the locking mechanism (35),
wherein the holder (11) has at least a first holding section (13) and a second holding section (15) which is disposed opposite the first holding section (13) with respect to a reception space (17) for the lock body (33),
wherein the first and second holding sections (13, 15) are configured to engage around the lock body (33), when the lock body (33) is inserted into the holder (11) along an introduction direction, at a first side and at a second side of the lock body (33) which is disposed opposite the first side,
**characterized in that**
the holder (11) has, at least at the first holding section (13), a securing opening (19) which is formed to take the button (37) of the lock body (33) into engagement in order hereby to secure the lock body (33) against an unintentional release from the holder (11) against the introduction direction (E).

2. A lock system (11) according to claim 1,
wherein the button (37) projects over the lock body (33) in a position of rest.

3. A lock system according to claim 1 or 2,
wherein the button (37) is preloaded against an actuation direction (B);
wherein the button (37) projects over a side surface of the lock body (33) along the actuation direction (B); and/or wherein the button (37) defines the maximum width of the lock body (33) along the actuation direction (B).

4. A lock system according to any one of the preceding claims,
wherein the locking mechanism (35) comprises a combination locking mechanism (43), wherein the button (37) can only be actuated to bring the button (37) out of engagement with the securing opening (19) of the holder (11) when a secret code is set at the combination locking mechanism (43).

5. A lock system according to any one of the preceding claims,
wherein the lock (31) has a flexible or rigid closing hoop (39) comprising at least one free end which is lockable to the lock body (33) to form a closed loop.

6. A lock system according to any one of the preceding claims,
wherein the securing opening (19) is circumferentially closed.

7. A lock system according to any one of the preceding claims,
wherein the holder (11) is circumferentially open; wherein the holder (11) in particular engages around the lock body (33) at three sides; or
wherein the holder (11) engages around the lock body (33) in a circumferentially closed manner.

8. A lock system according to any one of the preceding claims,
wherein the holder (11) has a further securing opening (21) at the second holding section (15), wherein the two holding sections (13, 15) and the two securing openings (19, 21) are provided in an arrangement which is rotationally symmetrical by 180 degrees to be able to selectively receive and secure the lock body (33) in one of two possible orientations.

9. A lock system according to any one of the preceding claims,
wherein the holder (11) has, at an end facing against the introduction direction (E), an introduction slope (23) which forms a cross-sectional widening of the holder (11) to facilitate the introduction of the lock body (33) into the holder (11) and/or to bring about an urging back of the button (37) when introducing the lock body (33) into the holder (11).

10. A lock system according to any one of the preceding claims,
wherein the holder (11) is open in and against the introduction direction (E),
wherein the first holding section (13) and the second holding section (15) bound a substantially constant cross-section of the reception space (17) for the lock body (33) so that the lock body (33) can be secured against an unintentional release from the holder (11) in and against the introduction direction (E) solely by the engagement of the button (37) of the lock body (33) into the securing opening (19).

11. A lock system according to any one of the claims 1 to 9,
wherein the holder (11) is formed as conically converging along the introduction direction (E) to limit the introduction depth of the lock body (33) inserted into the holder (11); and/or
wherein the holder (11) has a support section disposed in the introduction direction (E) to support the lock body (33) inserted into the holder (11) with respect to the introduction direction (E).

12. A lock system according to any one of the preceding claims,
wherein the holder (11) has a fastening section (25) comprising a fastening passage (27) which extends transversely to the introduction direction (E) and through which a fastening band for fastening the holder (11) to an object, in particular to a tube section of a two-wheeler, can be led; and/or
wherein the holder (11) has two fastening openings through which a respective fastening screw for fastening the holder (11) to an object, in particular to a tube section of a two-wheeler, can be led.

## Revendications

1. Système d'antivol comprenant un support (11) et un antivol (31) qui présente un corps (33) pourvu d'un mécanisme de verrouillage (35) et une touche (37) sollicitée par ressort pour actionner le mécanisme de verrouillage (35),
le support (11) comprenant au moins une première partie de retenue (13) et une seconde partie de retenue (15) opposée à la première partie de retenue (13) par rapport à un espace de réception (17) pour le corps (33), les première et seconde parties de retenue (13, 15) étant réalisées pour entourer le corps (33), inséré dans le support (11) le long d'une direction d'insertion, sur un premier côté et sur un second côté du corps (33) opposé au premier côté,
**caractérisé en ce que**
le support (11) présente, au moins sur la première partie de retenue (13), une ouverture de blocage (19) conçue pour engager la touche (37) du corps (33), afin de bloquer ainsi le corps (33) à l'encontre d'un détachement involontaire hors du support (11) dans le sens opposé à la direction d'insertion (E).

2. Système d'antivol selon la revendication 1,
dans lequel, dans une position de repos, la touche (37) dépasse au-delà du corps (33).

3. Système d'antivol selon la revendication 1 ou 2,
dans lequel la touche (37) est précontrainte dans le sens opposé à une direction d'actionnement (B),
la touche (37) dépasse au-delà d'une surface latérale du corps (33) le long de la direction d'actionnement (B), et/ou
la touche (37) définit la largeur maximale du corps (33) le long de la direction d'actionnement (B).

4. Système d'antivol selon l'une des revendications précédentes,
dans lequel le mécanisme de verrouillage (35) comprend un mécanisme de fermeture à combinaison (43),
la touche (37) peut être actionnée pour dégager la touche (37) hors de l'ouverture de blocage (19) du support (11) uniquement lorsqu'un secret de fermeture est réglé sur le mécanisme de fermeture à combinaison (43).

5. Système d'antivol selon l'une des revendications précédentes,
dans lequel l'antivol (31) comprend un étrier flexible ou rigide (39) ayant au moins une extrémité libre qui peut être verrouillée sur le corps (33) pour former une boucle fermée.

6. Système d'antivol selon l'une des revendications précédentes,
dans lequel l'ouverture de blocage (19) est fermée sur sa circonférence.

7. Système d'antivol selon l'une des revendications précédentes,
dans lequel le support (11) est ouvert sur sa circonférence, le support (11) entourant le corps (33), en particulier sur trois côtés ; ou
le support (11) entoure le corps (33) de manière fermée sur sa circonférence.

8. Système d'antivol selon l'une des revendications précédentes,
dans lequel le support (11) présente une autre ouverture de blocage (21) sur la seconde partie de retenue (15), les deux parties de retenue (13, 15) et les deux ouvertures de blocage (19, 21) étant prévues dans une disposition à symétrie de révolution de 180 degrés, afin de pouvoir recevoir et bloquer le corps (33) au choix dans l'une des deux orientations possibles.

9. Système d'antivol selon l'une des revendications précédentes,
dans lequel le support (11) présente, à son extrémité dirigée en sens opposé à la direction d'insertion (E), un biseau d'insertion (23) qui constitue un évasement de la section transversale du support (11), afin de faciliter l'insertion du corps (33) dans le support (11) et/ou de provoquer un refoulement de la touche (37) lors de l'insertion du corps (33) dans le support (11).

10. Système d'antivol selon l'une des revendications précédentes,
dans lequel le support (11) est ouvert dans la direction d'insertion (E) et en sens opposé à celle-ci, la première partie de retenue (13) et la seconde partie de retenue (15) délimitant une section transversale sensiblement constante de l'espace de réception (17) pour le corps (33), de sorte que le corps (33) peut être bloqué à l'encontre d'un détachement involontaire hors du support (11) dans la direction d'insertion (E) et en sens opposé à celle-ci par le seul engagement de la touche (37) du corps (33) dans l'ouverture de blocage (19).

11. Système d'antivol selon l'une des revendications 1 à 9,
dans lequel le support (11) est réalisé en se rétrécissant de manière conique le long de la direction d'insertion (E), afin de limiter la profondeur d'insertion du corps (33) placé dans le support (11) ; et/ou
le support (11) comprend une partie de soutien située dans la direction d'insertion (E), afin de soutenir le corps (33), placé dans le support (11), par rapport à la direction d'insertion (E).

12. Système d'antivol selon l'une des revendications précédentes,
dans lequel le support (11) comprend une partie de fixation (25) ayant un canal de fixation (27) s'étendant transversalement à la direction d'insertion (E), à travers lequel on peut faire passer une bande de fixation pour fixer le support (11) à un objet, en particulier à une partie tubulaire d'un deux-roues ; et/ou
le support (11) présente deux ouvertures de fixation à travers lesquelles on peut faire passer une vis de fixation respective pour fixer le support (11) à un objet, en particulier à une partie tubulaire d'un deux-roues.
